Europäisches Patentamt

European Patent Office

Office européen des brevets

(11) Publication number: **0 196 392**
**A2**

# EUROPEAN PATENT APPLICATION

(21) Application number: **85309529.7**

(22) Date of filing: **30.12.85**

(51) Int. Cl.⁴: **B 01 D 13/00**

(30) Priority: **29.03.85 US 717565**

(43) Date of publication of application:
**08.10.86 Bulletin 86/41**

(84) Designated Contracting States:
**CH DE FR GB IT LI**

(71) Applicant: **Wills, James E.**
**Box 67A Summer Road**
**Flemington New Jersey 08822(US)**

(72) Inventor: **Wills, James E.**
**Box 67A Summer Road**
**Flemington New Jersey 08822(US)**

(74) Representative: **Mair, Richard Douglas et al,**
**F.J. Cleveland & Company 40-43 Chancery Lane**
**London WC2A 1JQ(GB)**

(54) **Plural layer separator screen tangential flow filter device.**

(57) A filter pack for the filtration or processing of a biological or other liquid material comprises a collector plate (10) having a filtrate collector pocket (12), a plurality of separator screens (14) disposed in said collector pocket, filter membranes (24) overlying said separator screens and channel plates (28) overlying said filter membranes. Means are provided for feeding a liquid to be processed to said filter pack, as also are means for removing filtrate from said filter pack.

FIG. I

EP 0 196 392 A2

## PLURAL LAYER SEPARATOR SCREEN
## TANGENTIAL FLOW FILTER DEVICE

Background

The present invention relates to improved microporous and ultra filter membrane devices for filtering biological materials and other laboratory and industrial processing applications.

In the past a typical biological filter device consisted of a filter membrane bonded to a collector plate. A second membrane is normally bonded to the opposite side of the collector plate. The collector plate intermediate the two filter membranes has one or more collection pockets to receive the filtrate passing through the filter membranes. The collector pocket or pockets has previously contained a single layer of separator screen material which keeps the two membranes physically separated and facilitates flow of filtrate out of the pack through suitable exit ports. The pack is usually contained between suitable exit metal supporting plates having inlet means for biological liquids to be filtered and outlet ports for the filtrate process liquid to be recycled. The liquid to be filtered is normally fed under pressure sufficient to overcome the back-pressure of the device. Such filters may contain one filter pack or many such filter packs in a battery. Filters of this type have been commercially available and in widespread use for years.

The biological filters of the prior art have not been without disadvantages, however, among which have been difficulty of assembly for reliable leak-free operation and low flow rates with consequent high processing costs.

2

It is a primary object of the present invention, therefore, to provide biological filter elements having improved flow rates.

It is another primary object of the invention to provide biological filters which are easy to assemble to obtain reliable leak-free operation.

It is still another object of the invention to provide filter elements which are simple and economical in both manufacture and use.

It is yet another object of the invention to provide filter elements which are sealed without the use of a gasket.

Summary of the Invention

The foregoing and other objects of the invention, which will become apparent below, are attained by providing filter elements having a plurality of separator screens, rather than the single screen employed in the prior art. It has been found, entirely unexpectedly, that the use of two or more separator screens greatly increases the rate of flow through the filter thus materially reducing the cost of processing.

Another salient feature of the invention is the elimination of the usual rubber or other sealing gasket and the use of the plural screens as the sealing surfaces. More specifically, the plurality of separator screens, for example two, are bonded to the non-porous collector plates. The filter membranes on either side of the bonded plural screen separators and collector plates are also then bonded to the non-porous collector plates to form the leak-proof collector pocket of the filter element.

A non-porous channel plate is then placed on each side of the bonded plural separator screen - collector plate - filter membrane pack. The channel plates have a plurality of elongated

3

channels providing communication between inlet ports and outlet ports in the outer support plates for the material to be filtered, which is fed into the inlet ports under pressure and recycled from the outlet ports back to the inlet ports for further filtration. The material to be filtered flows down the channels of the channel plates and a portion of it passes through the exposed surfaces of the filter membranes into the pocket of the collector plate and out of the filtrate exit ports.

The bond or seal between the filter membranes, the plural separator screens, and the channel plates is an important aspect of the present invention, since it prevents mixing of the unfiltered material, with the filtrate without the use of a conventional rubber gasket. This eliminates not only the expense of the rubber gasket, but the difficulty of assembling the pack to avoid leakage. In this way, the use of elastomeric gaskets or the sealing of the membrane to the support plate, necessary in the prior art devices, is avoided.

The bond or seal of the membrane is, of course, necessary on both sides of the collector plate and the plural separator screens to promote filtrate flow out of the exit ports without mixing with the material being filtered.

Detailed Description of the Invention

The invention will now be described in greater detail in conjunction with the accompanying drawings, in which:

Fig. 1 is a plan view of a filter element of the invention showing a collector plate with a plurality of separator screens bonded thereto;

Fig. 2 is a plan view of a channel plate of the invention;

0196392

4

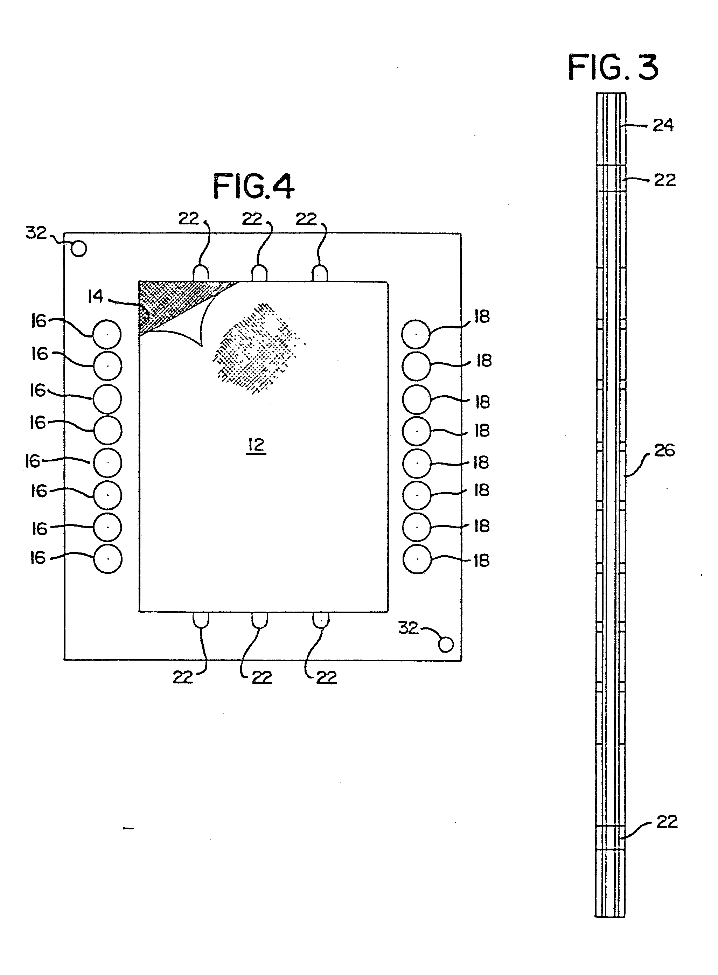

Fig. 3 is a cross-sectional view taken on the line A-A of Fig. 1 showing an assembled filter pack comprising a collector plate, two filter membranes and two channel plates; and

Fig. 4 is a plan view of another embodiment of the invention in which filtrate channel screen members are disposed between the separator screens adjacent the filtrate exit ports to facilitate flow of filtrate out of the pack.

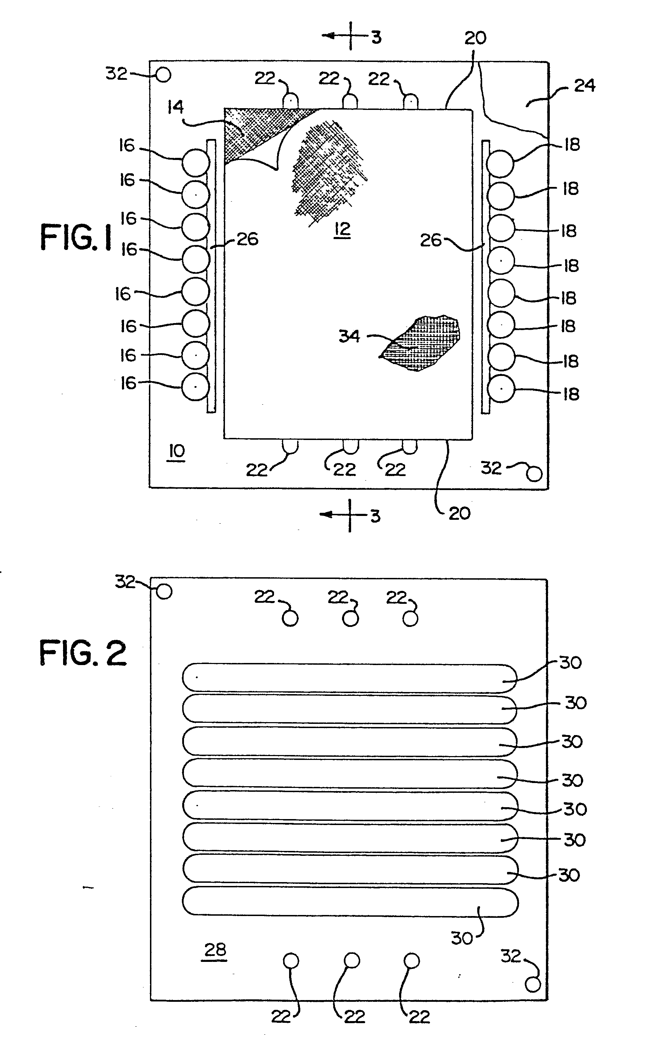

Referring now to the drawings, Fig. 1 shows a filter pack comprising a collector plate 10 having a filtrate collection pocket 12 in which are positioned a plurality, at least two, separator screens 14. A plurality of inlet ports 16 for the liquid biological or other material to be filtered or otherwise processed are positioned on one side of the collector plate. Similar outlet ports 18 are positioned on the opposite side of the collector plate 10. The separator screens 14 are heat sealed to the collector plate 10 at the edges 20 by means of a conventional impulse heat sealer – or by any other suitable means to anchor the separator screens in the filtrate collection pocket 12. A plurality of filtrate exit ports 22 are disposed adjacent the heat sealed edges 20.

The collector plate 10 and separator screens 14 are covered both top and bottom by a suitable filter membrane 24, which is co-extensive with the collector plate, and which has ports co-incident with the inlet and outlet ports 16 and 18 and filtrate exit ports 22. The filter membranes 24 are heat sealed to the collector plate 10 in seal lines 26 parallel to and adjacent the inlet and outlet ports 16 and 18. Obviously, any other suitable means or location of means for connecting the separator screens 14, filter membranes 24 and collector plate 10 can be employed.

-4-

5

The filter pack is completed by positioning a channel plate 28 as shown in Fig. 2 on each side of the assembly of Fig. 1. The channel plates 28 each have a plurality of channels 30 corresponding in number to the inlet and outlet ports 16 and 18. The opposite ends of the channels coincide with and communicate with the inlet and outlet ports 16 and 18.

One or more peg holes 32 in one or more diagonal corners of the collector plate 10, filter membranes 24 and channel plates 28 permit the filter pack to be assembled in only one orientation.

A filter may contain only one or up to 50 or 100 or more filter packs of the type described above. While not forming a part of the invention, the filter pack or battery of filter packs, may be supported externally by conventional support means such as metal plates and suitable means to compress the filter packs or battery of filter packs. Conventional means for feeding liquid material to be processed into the inlet ports 16, and for recycling liquid from the exit ports 18 to the inlet ports 16 may be provided. Conventional means for collecting filtrate or processed liquid from the filtrate exit ports 22 may also be provided.

A preferred embodiment of the invention, shown in Fig. 4, is similar to that described above, except that it includes as additional elements, a pair of filtrate channel screen members 34 which are elongated strips of material positioned between the separator screens 14 adjacent the filtrate exit ports 22. These filtrate channel plates 34 have a plurality of channels 36 on one or both surfaces thereof, which are normal to the exit ports 22 and facilitate flow of filtrate from the pocket 12 and separator screens 14 to the exit ports 22.

It will be noted that in Fig. 4, the filtrate exit ports 22 have a flat rather than rounded configuration adjacent the filtrate channel plates 34, thus facilitating flow of filtrate out of the filter pack.

As noted above, in operation, the liquid material to be processed flows through suitable conduits, not shown, into the inlet ports 16 through the channels 30 in channel plates 28 over the filter membranes 24 and out of outlet ports 18, from which it is recycled by suitable conduits, not shown, to inlet ports 16 for further processing. A portion of the liquid being processed, passes through the filter membranes 24 and out the filtrate exit ports 22 from which it is collected by suitable conduits and receptacles, not shown.

Also as noted above, the present invention, eliminates the conventional elastomeric gaskets required to provide a seal in filter packs of the prior art. This is accomplished by pressure of the channel plates 28 against the separator screens 14 and filter membranes 24. The sealing pressure is supplied by conventional filter element support means, such as exterior metal plates and clamping means, not shown.

The metal support plates, if used, or other suitable means, suitably include a manifold to collect filtrate from the ports 22.

The filter packs are normally operated under moderate feed pressures of about 1 to 2 lbs., but may be operated at pressures of as much as 40 lbs. or more. The pressure may be supplied by air, hydraulic or any other suitable means.

The novel plural screen filter packs of the present invention are markedly superior to the single screen filter packs of the prior art, in that they provide greatly increased flow of filtrate. Indeed, in a single screen device of the prior art, flow rates of about 400 to 700 ml/minute for a filter membrane of about one-third of a square foot, is normally obtained. With use of the plural screens of the present invention, however, for filter packs of the same dimensions, filtrate flow rates of as much as 1,500 to 1,800 ml/minute are achieved. Therefore, the present invention provides more than double the efficiency of the filter packs of the prior art.

The microporous or ultra membranes 24 are known to the art and are commercially available. Suitable materials of this type may be composed of nylon, polypropylene, polysulfone and other materials known to the art.

The novel filter packs of the invention may be used to filter or process, not only biological materials but pharmaceuticals, ultra pure water and chemicals. The appropriate membranes are selected based upon the intended use, e.g. to concentrate, or harvest cells which are retained on the membrane, or any other processing application.

0196392

What is Claimed is:

1. In a filter pack for the filtration or processing of a biological or other liquid material, comprising at least one collector plate having at least one collector pocket, a separator screen disposed in said collector pocket, at least one filter membrane overlying said separator screen, at least one channel plate overlying said filter membrane, means for feeding a liquid to be processed to said filter pack, and means for removing filtrate from said filter pack; the improvement which comprises:

employing a plurality of separator screens in the pocket of said collector plate in order to increase the flow of filtrate from said filter pack.

FIG. 1

FIG. 2

# FIG. 3

# FIG.4